# EUROPÄISCHE PATENTSCHRIFT

(11) **EP 2 304 305 B1**
(45) Veröffentlichungstag und Bekanntmachung des Hinweises auf die Patenterteilung: **10.09.2014**
(21) Anmeldenummer: 09768956.6
(22) Anmeldetag: 22.06.2009
(51) Int. Cl.: F16L 47/26, F16L 25/14, F16L 47/03

(54) **ROHRREDUZIERSTÜCK AUS EINEM KUNSTSTOFFMATERIAL**
PIPE REDUCTION PIECE MADE FROM PLASTIC MATERIAL
RACCORD RÉDUCTEUR DE TUBE EN UN MATÉRIAU PLASTIQUE

(30) Priorität: 24.06.2008 DE 202008008371 U
(43) Veröffentlichungstag der Anmeldung: 06.04.2011
(73) Patentinhaber: Rehau AG + Co, 95111 Rehau (DE)
(72) Erfinder: HEINDL, Andreas, 91126 Schwabach (DE)
(86) Internationale Anmeldenummer: PCT/EP2009/004480
(87) Internationale Veröffentlichungsnummer: WO 2009/156107

(56) Entgegenhaltungen:
- EP-A1- 0 521 276
- DE-A1- 4 406 582
- DE-A1-102005 052 825
- DE-U1-202006 009 436
- US-A- 3 567 257

## Beschreibung

### Hintergrund der Erfindung

Die Erfindung betrifft ein Rohrreduzierstück aus einem Kunststoffmaterial.

Bekannte Rohreduzierstücke dienen der Schaffung einer Fluid leitenden Verbindung zwischen zwei Rohren mit unterschiedlichen Innendurchmessern, wobei die bekannten Rohrreduzierstücke hierfür einen Aufbau aufweisen, der wenigstens drei Abschnitte umfasst, wobei zwei äußere Abschnitte mit zylinderförmigen bzw. gleichbleibenden Innendurchmessern ausgebildet sind, deren Innendurchmessern jeweils den Innendurchmessern der zu verbindenden Rohre entsprechen, und ein mittlerer Abschnitt einen Übergang zwischen den beiden unterschiedlich ausgebildeten Innendurchmessern herstellt.

Infolge dieses bekannten Aufbaus benötigen bekannte Rohrreduzierstücke eine gewissen Platz, vor allem wenn der Unterschied der Innendurchmesser der zu verbindenden Rohre recht groß ist, einhergehend mit dem Umstand, dass bei bestimmten Anwendungen, wo der Platz für eine zu installierende Rohrleitung begrenzt ist, die Montage meist sehr umstündlich und schwierig ist.

In der DE 10 2005 052 825 A1 ist ein Konnektor für Kunststoffrohre beschrieben, der auf einer Seite einen Steckkopf und auf der anderen eine Aufnahme zum Einschieben eines Endes des Kunststoffrohrs bis zu einem Stufenanschlag am Ende der Aufnahme hin aufweist. Zum Erleichtern des Einschiebens des Kunststoffrohrs in die Aufnahme mündet die Aufnahme über eine konische Fase nach außen aus. Der Übergang zwischen einem größeren und einem kleineren Innendurchmesser innerhalb des Konnektors erfolgt stufenförmig. Weitere Rohrverbindungsstücke oder Rohrverbindungsanordnungen sind aus den Dokumenten EP 0 521 276 A1, US 3,567,257 und DE 44 06 582 A1 bekannt.

### Zugrundeliegende Aufgabe

Der Erfindung liegt daher die Aufgabe zugrunde, ein Rohrreduzierstück anzugeben, das gegenüber entsprechenden bekannten Lösungen kleiner bzw. kompakter ausgebildet ist, und welches insbesondere bei Rohrinstallationen, bei denen nur ein geringer Raum für die zu verlegenden Rohre zur Verfügung steht, eine einfach vorzunehmende Verbindung zwischen Rohren mit unterschiedlichen Innendurchmessern ermöglicht.

### Erfindungsgemäße Lösung

Diese Aufgabe ist erfindungsgemäß mit einem Rohrreduzierstück aus einem Kunststoffmaterial gelöst, das ein Innenvolumen aufweist, das für die Durchströmung mit einem Fluid in einer vorgegebenen Durchströmungsrichtung vorgesehen ist, wobei das Rohrreduzierstück aus einem ersten Abschnitt und einem zweiten Abschnitt gebildet ist, die bündig aneinander angrenzende Innenwände aufweisen, wobei die Innenwand des ersten Abschnitts ein erstes zylinderförmig ausgebildetes Teilvolumen des Innenvolumens begrenzt, und wobei die Innenwand des zweiten Abschnitts ein zweites Teilvolumen des Innenvolumens begrenzt, das in Richtung des ersten Teilvolumens mit einer abnehmenden Querschnittsfläche ausgebildet ist, wobei der erste Abschnitt und der zweite Abschnitt im Wesentlichen rotationssymmetrisch um eine zentrale Längsachse des Rohreduzierstücks ausgebildet sind. Ein derartig ausgebildetes Rohrreduzierstück kann vorzugsweise durch ein zerspanendes Fertigungsverfahren in Form des bekannten "Drehens" aus einem Kunststoffmaterial-Rohling hergestellt werden. Erfindungsgemäß weist hierbei der erste Abschnitt eine Außenwand auf, an der ein Absatz mit einem Freistich ausgebildet ist. An dem Absatz, der infolge der rotationssymmetrischen Ausbildung um die zentrale Längsachse herum angeordnet ist, kann erfindungsgemäß ein Verbindungselement zur Anlage gebracht werden, das dafür vorgesehen ist, eine Verbindung zwischen einem der über das Rohrreduzierstück zu verbindenden Rohre um dem ersten Abschnitt bereitzustellen, wobei der erste Abschnitt bevorzugt für den Anschluss bzw. die Verbindung mit dem Rohr der beiden zu verbindenden Rohre vorgesehen ist, das den kleineren Innendurchmesser bzw. die kleinere Querschnittsfläche aufweist. Der erfindungsgemäß vorgesehene Freistich ist dafür vorgesehen Spannungsspitzen, welche durch die Kerbwirkung insbesondere bei Zugbelastung entstehen können, wirksam zu reduzieren. Der Absatz kann einen Abstand zu einer Stirnfläche des ersten Abschnitts aufweisen, der innerhalb eines Bereichs von 50 mm bis 70 mm liegt.

Das Rohrreduzierstück besteht erfindungsgemäß im Unterschied zu bekannten Lösungen lediglich aus zwei Abschnitten, wobei der zweite Abschnitt ein zweites Teilvolumen des Innenvolumens begrenzt, das in Richtung des ersten Teilvolumens (bzw. hin zu dem ersten Teilvolumen) mit einer abnehmenden Querschnittsfläche ausgebildet ist. Der zweite Abschnitt stellt einen Übergang zwischen zwei unterschiedlich großen Innendurchmessern bzw. Querschnittsflächen bereit, so dass ein dritter mittlerer Abschnitt, der bei bekannten Lösungen vorgesehen ist, nicht erforderlich ist, einhergehend mit einem gegenüber entsprechenden bekannten Rohrreduzierstücken deutlich verkleinertem und dennoch strömungsgünstigem Rohrreduzierstück, wobei sich die Strömungsgünstigkeit insbesondere im Druckverlust positiv bemerkbar macht. Die Reduzierung im Innendurchmesser ist auf den zweiten Abschnitt verlegt, der vorzugsweise für die Verbindung mit dem Rohr mit dem größeren Innendurchmesser vorgesehen ist, so dass die gesamte Länge des zweiten Abschnitts zur Verringerung des Innendurchmessers zur Verfügung steht und genutzt werden kann.

Der erste Abschnitt weist ein zylinderförmig ausgebildetes Innenvolumen auf (bzw. ein im Wesentlichen zylinderförmig ausgebildetes Innenvolumen), also ein Innenvolumen mit gleichbleibend ausgebildeter Querschnittsfläche (bzw. mit im Wesentlichen gleichbleibend ausgebildeter Querschnittsfläche).

Die Abschnitte weisen bündig aneinander angrenzende Innenwände auf, so dass beispielsweise die Innenwand des ersten Abschnitts bündig an die Innenwand des zweiten Abschnitts angrenzt bzw. bündig an die Innenwand des zweiten Abschnitts anschließt, einhergehend mit der Schaffung eines bündigen Übergangs zwischen der Innenwand des ersten Abschnitts und der Innenwand des zweiten Abschnitts.

Die erfindungsgemäße bündige Angrenzung vermeidet in vorteilhafter Weise eine ungünstige Strömungsführung infolge von nachteiligen Vorsprüngen oder Vertiefungen im Übergangsbereich. Vorzugsweise weist die Innenwand des zweiten Abschnitts hierbei eine konisch verlaufende Innenwand auf, um eine strömungsoptimierte Strömungsführung bereitzustellen.

Die vorgegebene Durchströmungsrichtung umfasst vorzugsweise eine Einströmung über den zweiten Abschnitt, wobei der zweite Abschnitt für den Anschluss bzw. die Verbindung mit dem Rohr der beiden zu verbindenden Rohre vorgesehen ist, das den größeren Innendurchmesser bzw. die größere Querschnittsfläche aufweist.

Bei einer praktischen Ausführungsform ist im Hinblick auf eine optimale Strömungsführung, die insbesondere nachteilige Verwirbelungen wirksam vermeidet, das zweite Teilvolumen in Form eines Kegelstumpfs ausgebildet ist, der eine Deckfläche aufweist, die an das erste Teilvolumen angrenzt.

Ein gemäß der Erfindung ausgebildetes Rohrreduzierstück kann vorzugsweise durch ein zerspanendes Fertigungsverfahren in Form des bekannten "Drehens" aus einem Kunststoffmaterial-Rohling hergestellt werden.

Bei einer weiteren praktischen Ausführungsform weist ein Endbereich des ersten Abschnitts einen Außendurchmesser auf, der kleiner ausgebildet ist als der Außendurchmesser des zweiten Abschnitts, wobei der Außendurchmesser des Endbereichs eine Größe aufweist, die innerhalb eines Bereichs von 70 mm bis 80 mm liegt, und wobei der Außendurchmesser des zweiten Abschnitts eine Größe aufweist, die innerhalb eines Bereichs von 85 mm bis 165 mm liegt. Der Endbereich ist hierbei erfindungsgemäß für die Verbindung mit dem Rohr der durch das Rohrreduzierstück zu verbindenden Rohre vorgesehen, das den kleineren Innendurchmesser bzw. die kleinere Querschnittsfläche aufweist.

Bevorzugt weist das erste Teilvolumen eine kreisförmige Querschnittsfläche mit einem Durchmesser von 60 mm bis 65 mm auf. Das zweite Teilvolumen kann eine kleinste kreisförmige Querschnittsfläche mit einem Durchmesser von 60 mm bis 65 mm und eine größte kreisförmige Querschnittsfläche mit einem Durchmesser von 70 mm bis 140 mm aufweisen.

Erfindungsgemäß kann das Rohrreduzierstück eine Gesamtlänge aufweisen, die innerhalb eines Bereichs von 120 mm bis 180 mm liegt, wobei der erste Abschnitt eine Länge aufweist, die innerhalb eines Bereichs von 50 mm bis 80 mm liegt.

Erfindungsgemäß kann eine Anordnung aus wenigstens zwei Rohren geschaffen werden, die mit ihren Endabschnitten mit einem Rohrreduzierstück (10) gemäß vorliegender Erfindung verbunden sind.

### Kurzbeschreibung der Zeichnungen

Nachfolgend werden Ausführungsbeispiele der Erfindung anhand der beigefügten Zeichnungen näher erläutert. Es zeigt:
- Fig. 1: eine schematische Schnittdarstellung eines Ausführungsbeispiels eines erfindungsgemäßen Rohrreduzierstücks;
- Fig. 2: eine schematische Schnittdarstellung eines weiteren Ausführungsbeispiels eines erfindungsgemäßen Rohrreduzierstücks; und
- Fig. 3: eine schematische Schnittdarstellung einer Anordnung, umfassend ein erfindungsgemäßes Rohrreduzierstück, zwei Endabschnitte von zwei zu verbindenden Rohren und zwei Verbindungselemente.

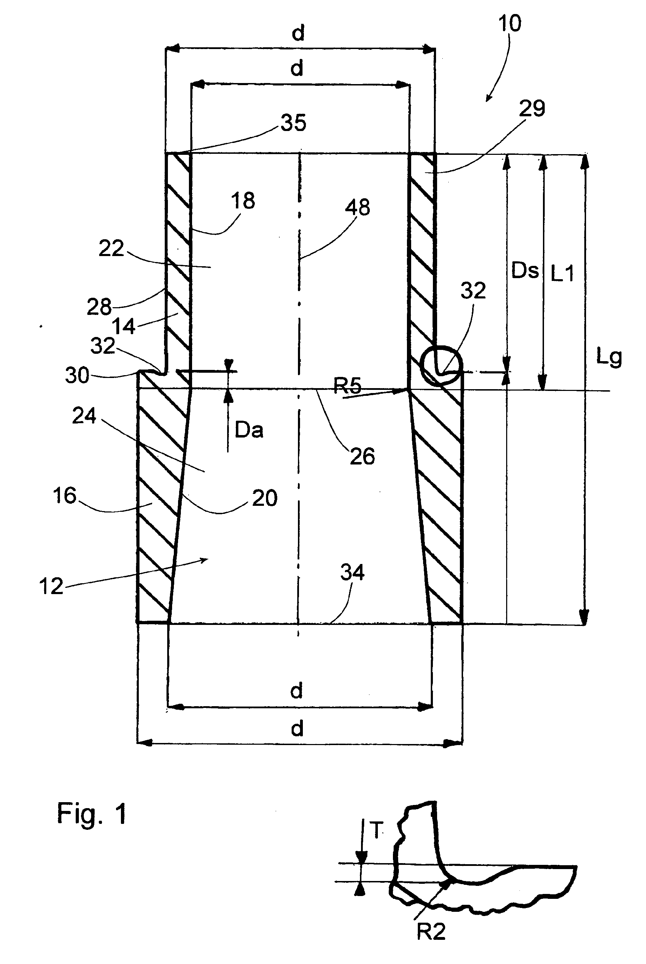

Fig. 1 zeigt eine schematische Schnittdarstellung eines Ausführungsbeispiels eines erfindungsgemäßen Rohrreduzierstücks 10 aus einem Kunststoffmaterial. Das Rohrreduzierstück 10 weist ein Innenvolumen 12 auf, das für die Durchströmung mit einem Fluid vorgesehen ist. Das Rohrreduzierstück 10 ist aus einem ersten Abschnitt 14 und einem zweiten Abschnitt 16 gebildet, die bündig aneinander angrenzende Innenwände 18, 20 aufweisen, um eine strömungsgünstige Führung für die Strömung bereitzustellen. Die Innenwand 18 des ersten Abschnitts 14 begrenzt ein erstes zylinderförmig ausgebildetes Teilvolumen 22 des Innenvolumens 12, und die Innenwand 20 des zweiten Abschnitts 16 begrenzt ein zweites Teilvolumen 24 des Innenvolumens 12, das mit einer in Richtung des ersten Teilvolumens 22 abnehmenden Querschnittsfläche in Form eines Kegelstumpfs ausgebildet ist, der eine Deckfläche aufweist, die an das erste Teilvolumen 22 angrenzt, einhergehend mit einer vorteilhaften Strömungsführung, wobei hierbei das zweite Teilvolumen 24 eine kleinste Querschnittsfläche 26 aufweist, die der Querschnittsfläche des ersten zylinderförmigen Teilvolumens 22 entspricht bzw. im Wesentlichen entspricht.

Das Rohrreduzierstück 10 ist dafür vorgesehen mit einem Fluid in einer Durchströmungsrichtung durchströmt zu werden, bei der das Fluid über den zweiten Abschnitt 16 einströmt. Der erste Abschnitt 14 weist einen Endbereich 29 auf, der für die Verbindung mit demjenigen der beiden durch das Rohrreduzierstück zu verbindenden Rohre vorgesehen ist, das den kleineren Innendurchmesser bzw. die kleinere Querschnittsfläche aufweist. Der zweite Abschnitt 16 ist für die Verbindung mit dem anderen Rohr der beiden zu verbindenden Rohre vorgesehen, das den größeren Innendurchmesser bzw. die größere Querschnittsfläche aufweist.

Das Rohrreduzierstück 10 ist ein durch bekanntes Drehen spanend hergestelltes Rohrreduzierstück 10, das um eine zentrale Längsachse 48 rotationssymmetrisch ausgebildet ist, wobei der erste Abschnitt 14 eine Außenwand 28 aufweist, an der ein Absatz 30 mit einem Freistich 32 ausgebildet ist, wobei der Freistich 32 einen Radius R von 2 mm aufweist, der jedoch auch beispielsweise innerhalb eines Bereichs von 1 mm bis 4 mm liegen kann, und ferner eine entsprechende Tiefe T von ca. 1 mm aufweist (die Freistrichkontur ist in Fig. 1 unten vergrößert dargestellt).

Der Absatz 30 weist einen Abstand Ds zu einer Stirnfläche 35 des ersten Abschnitts 14 auf, der ca. 61 mm beträgt (vorzugsweise mit einer Toleranz von plus 1 mm), und weist ferner einen kleinsten Abstand Da zu dem zweiten Abschnitt auf, der ca. 5 mm beträgt (vorzugsweise mit einer Toleranz von plus 1 mm). Der Übergang zwischen dem ersten Teilvolumen 22 und dem zweiten Teilvolumen 24 umfasst einen Radius von 5 mm.

Der Endbereich 29 des ersten Abschnitts 14 weist einen Außendurchmesser d mit einer Größe auf, die ca. 75 mm beträgt (vorzugsweise mit einer Toleranz von minus 0,2 mm) und erfindungsgemäß auch beispielsweise Werte innerhalb eines Bereichs von 70 mm bis 80 mm aufweisen kann. Der Außendurchmesser d des zweiten Abschnitts 16 weist eine Größe auf, die ca. 90 mm (vorzugsweise mit einer Toleranz von minus 0,2 mm) beträgt und erfindungsgemäß auch Werte innerhalb eines Bereichs von 85 mm bis 165 mm aufweisen kann.

Das erste zylinderförmige Teilvolumen 22 weist eine kreisförmige Querschnittsfläche mit einem Durchmesser d von 61, 4 mm (vorzugsweise mit einer Toleranz von minus 0,3 mm) auf, wobei der Durchmesser erfindungsgemäß auch beispielsweise Werte innerhalb eines Bereichs von 60 mm bis 65 mm aufweisen kann. Das zweite Teilvolumen 24 kann eine größte kreisförmige Querschnittsfläche 34 mit einem Durchmesser d von 73, 6 mm (vorzugsweise mit einer Toleranz von minus 0,3 mm) aufweisen, wobei der Durchmesser erfindungsgemäß auch beispielsweise Werte innerhalb eines Bereichs von 70 mm bis 140 mm aufweisen kann.

Das Rohrreduzierstück 10 weist ferner eine Gesamtlänge Lg auf, die ca. 132 mm beträgt (vorzugsweise mit einer Toleranz von plus 2 mm), wobei die Gesamtlänge Lg erfindungsgemäß beispielsweise auch innerhalb eines Bereichs von 120 mm bis 180 mm liegen kann. Der erste Abschnitt 14 weist eine Länge L1 auf, die ca. 70 mm beträgt (vorzugsweise mit einer Toleranz von plus 1 mm) und die erfindungsgemäß beispielsweise auch innerhalb eines Bereichs von 50 mm bis 80 mm liegen kann.

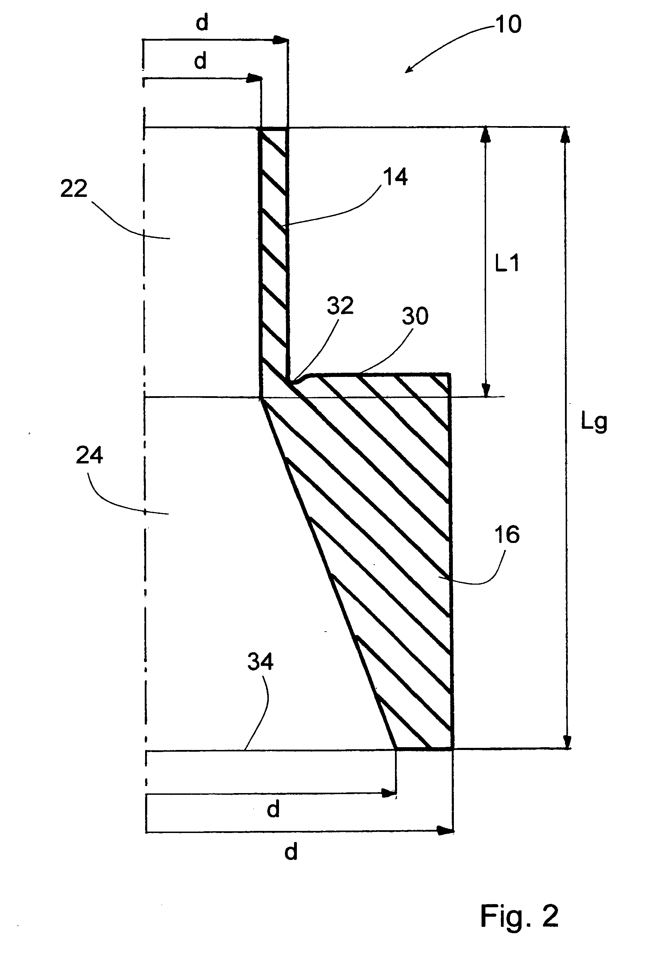

Fig. 2 zeigt eine schematische Schnittdarstellung eines weiteren Ausführungsbeispiels eines erfindungsgemäßen Rohrreduzierstücks 10, bei dem der zweite Abschnitt 16 im Vergleich zu dem in Fig.1 dargestellten Rohrreduzierstück 10 einen deutlich größeren Außendurchmesser d von ca. 160 mm aufweist. Das zweite Teilvolumen 24 weist ferner eine größte kreisförmige Querschnittsfläche 34 mit einem Durchmesser von 130,8 mm auf. Auch die Gesamtlänge Lg ist hier vergrößert ausgebildet.

Sie beträgt ca. 165 mm, wobei der erste Abschnitt eine Länge L1 aufweist, die ca. 70,5 mm beträgt. Der Freistich 32 weist hier einen Radius von 3 mm auf.

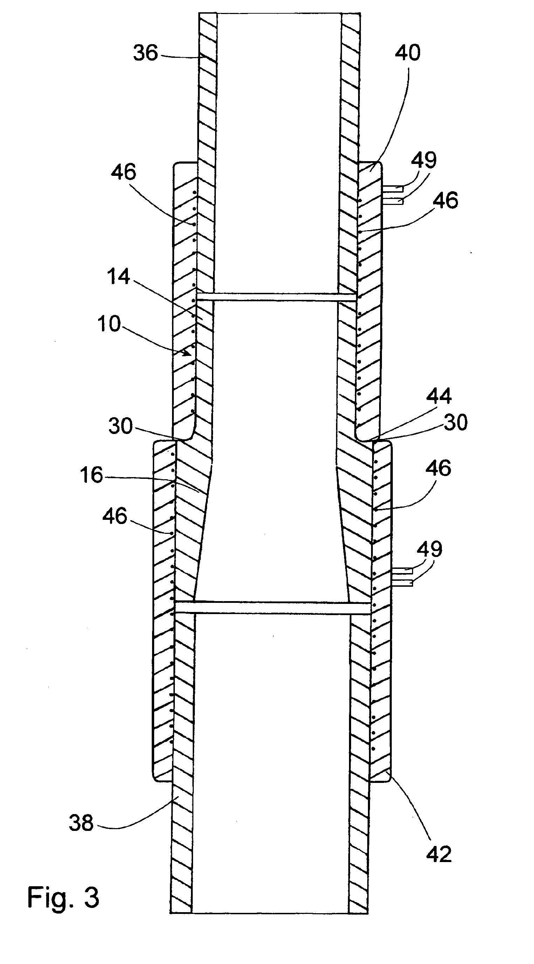

Fig. 3 zeigt eine schematische Schnittdarstellung einer Anordnung, umfassend ein erfindungsgemäßes Rohrreduzierstück 10, zwei Endabschnitte 36, 38 von zwei zu verbindenden Rohren und zwei Verbindungselemente 40, 42.

In Fig. 3 dargestellt ist die Situation vor Verbindung des ersten bzw. zweiten Abschnitts 14, 16 des Rohrreduzierstücks 10 mit den Endabschnitten 36, 38 zweier Rohre aus Kunststoffmaterial über ein erstes und ein zweites Verbindungselement 40, 42 aus Kunststoffmaterial, in denen die Endabschnitte 36, 38 teilweise aufgenommen sind. Das erste Verbindungselement 40 liegt mit einer Stirnfläche 44 an dem erfindungsgemäßen Absatz 30 des ersten Abschnitts 14 des Rohrreduzierstücks 10 an. Zur Bereitstellung einer stoffschlüssigen Verbindung zwischen dem ersten Abschnitt 14 des Rohrreduzierstücks 10 und dem Endabschnitt 36 bzw. zwischen dem zweiten Abschnitt 16 des Rohrreduzierstücks 10 und dem Endabschnitt 38 weist jedes Verbindungselement 40, 42 eine bestrombare Heizvorrichtung 46 in Form eines Heizdrahts 46 auf, der ein Aufschmelzen des Kunststoffmaterials der Verbindungselemente 40, 42 in Umgebung der Heizdrähte 46 durch Erwärmen bzw. Erhitzen ermöglicht, um eine stoffschlüssige und Fluid dichte Verbindung zwischen den Endabschnitten 36, 38 und dem Rohrreduzierstück 10 zu schaffen. Die Enden jedes Heizdrahts 46 sind in jeweils einem Anschlusselement 49 (schematisch dargestellt) der Verbindungselemente 40, 42 aufgenommen, wobei die Anschlusselemente 49 eingerichtet sind, an eine übliche Stromquelle angeschlossen zu werden, die dafür vorgesehen ist, den Heizdraht 46 zu bestromen.

### Bezugszeichenliste

- 10: Rohrreduzierstück
- 12: Innenvolumen
- 14: erster Abschnitt
- 16: zweiter Abschnitt
- 18: Innenwand erster Abschnitt
- 20: Innenwand zweiter Abschnitt
- 22: erstes Teilvolumen
- 24: zweites Teilvolumen
- 26: Querschnittsfläche zweites Teilvolumen
- 28: Außenwand des ersten Abschnitts
- 29: Endbereich
- 30: Absatz
- 32: Freistich
- 34: Querschnittsfläche zweites Teilvolumen
- 35: Stirnfläche erster Abschnitt
- 36, 38: Endabschnitt Rohr
- 40, 42: Verbindungselement
- 44: Stirnfläche Verbindungselement
- 46: Heizdraht
- 48: zentrale Längsachse
- 49: Anschlusselement

## Patentansprüche

1. Rohrreduzierstück (10) aus einem Kunststoffmaterial, das ein Innenvolumen (12) aufweist, das für die Durchströmung mit einem Fluid in einer vorgegebenen Durchströmungsrichtung vorgesehen ist, wobei das Rohrreduzierstück (10) aus einem ersten Abschnitt (14) und einem zweiten Abschnitt (16) gebildet ist, die bündig aneinander angrenzende Innenwände (18, 20) aufweisen, wobei die Innenwand (18) des ersten Abschnitts (14) ein erstes zylinderförmig ausgebildetes Teilvolumen (22) des Innenvolumens (12) begrenzt, wobei die Innenwand (20) des zweiten Abschnitts (16) ein zweites Teilvolumen (24) des Innenvolumens (12) begrenzt, das in Richtung des ersten Teilvolumens (22) mit einer abnehmenden Querschnittsfläche ausgebildet ist und wobei der erste Abschnitt (14) und der zweite Abschnitt (16) im Wesentlichen rotationssymmetrisch um eine zentrale Längsachse (48) des Rohrreduzierstücks (10) ausgebildet sind, **dadurch gekennzeichnet, dass** der erste Abschnitt (14) eine Außenwand (28) aufweist, an der ein Absatz (30) mit einem Freistich (32) ausgebildet ist.

2. Rohrreduzierstück (10) nach Anspruch 1, **dadurch gekennzeichnet, dass** das zweite Teilvolumen (24) in Form eines Kegelstumpfs ausgebildet ist, der eine Deckfläche aufweist, die an das erste Teilvolumen (22) angrenzt.

3. Rohrreduzierstück (10) nach Anspruch 1, **dadurch gekennzeichnet, dass** der Absatz (30) einen Abstand zu einer Stirnfläche (35) des ersten Abschnitts (14) aufweist, der innerhalb eines Bereichs von 50 mm bis 70 mm liegt.

4. Rohrreduzierstück (10) nach einem der Ansprüche 1 oder 3, **dadurch gekennzeichnet, dass** ein Endbereich (29) des ersten Abschnitts (14) einen Außendurchmesser aufweist, der kleiner ausgebildet ist als der Außendurchmesser des zweiten Abschnitts (16), wobei der Außendurchmesser des Endbereichs (29) eine Größe aufweist, die innerhalb eines Bereichs von 70 mm bis 80 mm liegt, und wobei der Außendurchmesser des zweiten Abschnitts (16) eine Größe aufweist, die innerhalb eines Bereichs von 85 mm bis 165 mm liegt.

5. Rohrreduzierstück (10) nach einem der vorangehenden Ansprüche, **dadurch gekennzeichnet, dass** das erste Teilvolumen (22) eine kreisförmige Querschnittsfläche mit einem Durchmesser von 60 mm bis 65 mm aufweist.

6. Rohrreduzierstück (10) nach einem der vorangehenden Ansprüche, **dadurch gekennzeichnet, dass** das zweite Teilvolumen (24) eine kleinste kreisförmige Querschnittsfläche (26) mit einem Durchmesser von 60 mm bis 65 mm und eine größte kreisförmige Querschnittsfläche (34) mit einem Durchmesser von 70 mm bis 140 mm aufweist.

7. Rohrreduzierstück (10) nach einem der vorangehenden Ansprüche, **dadurch gekennzeichnet, dass** das Rohrreduzierstück (10) eine Gesamtlänge aufweist, die innerhalb eines Bereichs von 120 mm bis 180 mm liegt, wobei das erste Abschnitt (14) ein Länge aufweist, die innerhalb eines Bereichs von 50 mm bis 80 mm liegt.

8. Anordnung aus wenigstens zwei Rohren, die mit ihren Endabschnitten (36, 38) mit einem Rohrreduzierstück (10) gemäß einem der Ansprüche 1 bis 7 verbunden sind.

## Claims

1. Pipe-reduction piece (10) which is made of a plastics material and has an inner volume (12) which is provided for the throughflow of a fluid in a predetermined throughflow direction, wherein the pipe-reduction piece (10) is formed from a first portion (14) and a second portion (16), which have inner walls (18, 20) which follow one after the other in a flush manner, wherein the inner wall (18) of the first portion (14) bounds a first, cylindrical sub-volume (22) of the inner volume (12), wherein the inner wall (20) of the second portion (16) bounds a second sub-volume (24) of the inner volume (12), said second sub-volume being formed with a decreasing cross-sectional surface area in the direction of the first sub-volume (22), and wherein the first portion (14) and the second portion (16) are designed to be essentially rotationally symmetrical about a central longitudinal axis (48) of the pipe-reduction piece (10), **characterized in that** the first portion (14) has an outer wall (28), on which is formed a shoulder (30) with an undercut (32).

2. Pipe-reduction piece (10) according to Claim 1, **characterized in that** the second sub-volume (24) is designed in the form of a truncated cone which has a top surface which follows on from the first sub-volume (22).

3. Pipe-reduction piece (10) according to Claim 1, **characterized in that** the shoulder (30) is spaced apart from an end surface (35) of the first portion (14) by a distance that ranges from 50 mm to 70 mm.

4. Pipe-reduction piece (10) according to either of Claims 1 and 3, **characterized in that** an end region (29) of the first portion (14) has an external diameter which is smaller than the external diameter of the second portion (16), wherein the external diameter of the end region (29) ranges from 70 mm to 80 mm, and wherein the external diameter of the second portion (16) ranges from 85 mm to 165 mm.

5. Pipe-reduction piece (10) according to one of the preceding claims, **characterized in that** the first sub-volume (22) has a circular cross-sectional surface area with a diameter of 60 mm to 65 mm.

6. Pipe-reduction piece (10) according to one of the preceding claims, **characterized in that** the second sub-volume (24) has a smallest circular cross-sectional surface area (26) with a diameter of 60 mm to 65 mm and a largest circular cross-sectional surface area (34) with a diameter of 70 mm to 140 mm.

7. Pipe-reduction piece (10) according to one of the preceding claims, **characterized in that** the pipe-reduction piece (10) has an overall length ranging from 120 mm to 180 mm, wherein the first portion (14) has a length ranging from 50 mm to 80 mm.

8. Arrangement made up of at least two pipes which have their end portions (36, 38) connected to a pipe-reduction piece (10) according to one of Claims 1 to 7.

## Revendications

1. Raccord réducteur de tube (10) constitué d'un matériau plastique, lequel présente un volume intérieur (12) qui est prévu pour être traversé par un fluide dans un sens d'écoulement prédéfini, le raccord réducteur de tube (10) étant formé à partir d'une première portion (14) et d'une deuxième portion (16) qui comprennent des parois intérieures (18, 20) adjacentes l'une à l'autre en affleurement, la paroi intérieure (18) de la première portion (14) délimitant un premier volume partiel (22), réalisé sous forme cylindrique, du volume intérieur (12), la paroi intérieure (20) de la deuxième portion (16) délimitant un deuxième volume partiel (24) du volume intérieur (12) qui est réalisé avec une surface de section transversale décroissante en direction du premier volume partiel (22), et la première portion (14) et la deuxième portion (16) étant réalisées de manière à présenter essentiellement une symétrie de révolution autour d'un axe longitudinal central (48) du raccord réducteur de tube (10), **caractérisé en ce que** la première portion (14) comprend une paroi extérieure (28) sur laquelle est réalisé un épaulement (30) présentant une rainure de dégagement (32).

2. Raccord réducteur de tube (10) selon la revendication 1, **caractérisé en ce que** le deuxième volume partiel (24) est réalisé sous la forme d'un cône tronqué qui présente une surface supérieure qui est adjacente au premier volume partiel (22).

3. Raccord réducteur de tube (10) selon la revendication 1, **caractérisé en ce que** l'épaulement (30) présente une certaine distance à une surface frontale (35) de la première portion (14), laquelle distance se situe dans une plage de 50 mm à 70 mm.

4. Raccord réducteur de tube (10) selon l'une quelconque des revendications 1 et 3, **caractérisé en ce qu'**une région d'extrémité (29) de la première portion (14) présente un diamètre extérieur qui est inférieur au diamètre extérieur de la deuxième portion (16), le diamètre extérieur de la région d'extrémité (29) présentant une dimension qui se situe dans une plage de 70 mm à 80 mm, et le diamètre extérieur de la deuxième portion (16) présentant une dimension qui se situe dans une plage de 85 mm à 165 mm.

5. Raccord réducteur de tube (10) selon l'une quelconque des revendications précédentes, **caractérisé en ce que** le premier volume partiel (22) présente une surface de section transversale circulaire présentant un diamètre de 60 mm à 65 mm.

6. Raccord réducteur de tube (10) selon l'une quelconque des revendications précédentes, **caractérisé en ce que** le deuxième volume partiel (24) présente une surface de section transversale (26) circulaire la plus petite présentant un diamètre de 60 mm à 65 mm et une surface de section transversale (34) circulaire la plus grande présentant un diamètre de 70 mm à 140 mm.

7. Raccord réducteur de tube (10) selon l'une quelconque des revendications précédentes, **caractérisé en ce que** le raccord réducteur de tube (10) présente une longueur totale qui se situe dans une plage de 120 mm à 180 mm, la première portion (14) présentant une longueur qui se situe dans une plage de 50 mm à 80 mm.

8. Ensemble constitué d'au moins deux tubes qui sont reliés, par leurs portions d'extrémité (36, 38), à un raccord réducteur de tube (10) selon l'une quelconque des revendications 1 à 7.
